# EUROPEAN PATENT APPLICATION

(11) **EP 3 945 207 A1**
(43) Date of publication of application: **02.02.2022**
(21) Application number: 20382697.9
(22) Date of filing: 30.07.2020
(51) Int. Cl.: F03D 1/02, F03D 3/02

(54) **LATTICE FRAMEWORK**

(71) Applicant: Siemens Gamesa Renewable Energy Innovation & Technology S.L., 31621 Sarriguren (Navarra) (ES)
(72) Inventor: Gancedo Sustatxa, Joel, 31110 Noain (ES)
(74) Representative: Aspacher, Karl-Georg

(57) **Abstract**

The invention describes a lattice framework (IF) of a multi-rotor wind energy plant (1), comprising at least a plurality of lattice elements (1E) arranged according to a geometric pattern; and a plurality of lattice nodes (IN), wherein each lattice node (IN) comprises a plurality of outwardly extending lattice connectors (1C) for connection to converging lattice elements (1E), and wherein each lattice node (IN) is realised as a bedframe of a wind turbine unit (10) of the multi-rotor wind energy plant (1). The invention further describes a method of manufacturing a lattice node (IN) of such a lattice framework (IF); and a wind energy plant (1) comprising a plurality of wind turbine units (10) arranged in such a lattice framework (IF)

## Description

The invention describes a lattice framework of a multi-rotor wind energy plant, and a method of manufacturing a lattice node.

### Background

Wind turbines are generally perceived as single units, with a nacelle mounted on a tower, and an aerodynamic rotor to turn the shaft of a generator housed in the nacelle. However, there are other ways of constructing wind energy plants. For example, it is possible for a single tower to support several small wind turbines arranged on "branches" that extend sideways from the tower.

Other multi-rotor wind energy plants are in discussion, for example wind energy plants that comprise many smaller wind turbine units in a supporting structure that can be yawed as a single unit. The supporting structure can be a framework made of struts or beams that meet at nodes, for example a framework based on a diamond, triangle or beehive mesh pattern, with nodes at the intersections of the framework elements. Wind turbine units are then mounted to the framework, for example a wind turbine unit can be arranged in the "empty spaces" of the lattice framework. Each wind turbine unit can comprise the usual aerodynamic rotor and a generator, with the generator mounted onto a bedframe, which is usually made of cast steel and/or welded steel elements. The bedframe also carries any hydraulic and electrical components of the wind turbine, and must be constructed to transfer loads to the lattice framework. The bedframe of a wind turbine unit must therefore be connected in some way to the framework.

However, the known proposals are costly and difficult to realise for a number of reasons. If the lattice nodes are to be welded, the ends of the tubular elements must be precisely shaped in order for the edges to abut, and the welding step is time-consuming and difficult. In an alternative approach, the node for an intersection of multiple tubular elements can be cast separately, and the ends of the tubular elements can be inserted into the cast node to construct the lattice framework. While a cast node has the advantage of reducing stress concentration, it is costly to manufacture. Furthermore, it is difficult to mount a bedframe to a lattice structure so that loads are reliably and safely transferred to the lattice framework. The conventional bedframe design for a horizontal-axis wind turbine is intended for mounting to a single tower and therefore cannot be implemented in a multirotor support structure.

It is therefore an object of the invention to provide an improved way of realising a multi-rotor wind energy plant.

### Description

The object of the invention is achieved by the lattice framework of claim 1; by the method of claim 10 of manufacturing such a lattice node; by the multi-rotor wind energy plant of claim 13; and by the method of claim 15 of constructing such a wind energy plant.

According to the invention, the lattice framework of a multi-rotor wind energy plant comprises a plurality of lattice elements or struts arranged according to a geometric pattern; and a plurality of lattice nodes, wherein each lattice node comprises a plurality of outwardly extending lattice connectors for connection to a group of converging lattice elements, and wherein each lattice node is realised as a bedframe of a wind turbine unit of the multi-rotor wind energy plant.

Because the lattice nodes described above have an additional function, they can be referred to herein as "functional lattice nodes". A lattice node may also be referred to herein as a "bedframe node", because it is a node of the lattice but also a bedframe of a wind turbine unit. Of course, the lattice framework may have nodes that simply join several lattice elements, for example about the perimeter of the framework, and these may be regarded as "simple nodes" or "non-functional nodes".

Lattice connectors shall be understood to extend outwardly from the main body of a lattice node, and the number of lattice connectors depends on the nature of the lattice - e.g. whether the lattice is based on a hexagonal arrangement of framework elements, a triangular arrangement, a diamond arrangement, etc. It follows that the orientation of each lattice connector also depends on the lattice structure.

The term "bedframe" shall be understood in the context of the generator bedframe of a wind turbine unit, i.e. the structure that is used primarily to support the generator of the wind turbine unit and to transfer loads to a further structure. A generator bedframe is generally constructed so that the generator and other components can be securely mounted to it in order to counteract forces (turning moments, vibrations, etc.) that arise during operation of the wind turbine, as will be known to the skilled person.

An advantage of the inventive lattice framework is that the lattice nodes can significantly reduce the costs associated with realising a multi-rotor wind turbine system based on a lattice framework. Two major aspects of such a structure are: how to manufacture the structurally important nodes of the lattice, and how to mount multiple wind turbine units to the lattice. Instead of separately addressing these problems, the inventors have realised that a bedframe and a lattice node could be realized as a single element.

According to the invention, the method of manufacturing a lattice node for such a lattice framework comprises the steps of determining a possible position for a bedframe relative to a geometric node of the lattice framework; obtaining the geometric parameters of the lattice elements; forming a lattice node mould pattern to include a plurality of lattice connectors on the basis of the geometric position of the bedframe and the geometric parameters of the lattice elements; and subsequently performing a casting procedure such as an expendable mould casting procedure to cast the lattice node.

The mould pattern can be made of wood or metal, for example, or from a more economical material such as expanded polystyrene, as will be known to a person skilled in casting techniques. A single mould pattern can be re-used many times to form an expendable mould from a cheap material such as sand, which can be re-used essentially indefinitely.

A geometric node of the lattice framework shall be understood as the point in 3D space at the intersection of the axes of lattice elements. The position of a bedframe relative to a geometric node of the lattice framework can be determined by considering the mass of each wind turbine component (including the mass of the bedframe), locating the centre of mass of the entire wind turbine unit, and determining a suitable position for the bedframe of that wind turbine unit so that the centre of mass of the wind turbine unit is as close as possible to the geometric node. The geometric parameters of the lattice elements can be their inner and outer dimensions, as well as their orientation in space.

An advantage of the inventive method is that it reduces the cost of manufacturing the lattice and the wind turbine units, since a lattice node and a wind turbine bedframe are cast as a single part. The invention therefore provides a more economical alternative to the known approach that requires separate manufacturing procedures to produce the lattice nodes and the bedframe, and which also requires a separate solution to secure the wind turbine units to the lattice framework.

According to the invention, the wind energy plant comprises a plurality of wind turbine units arranged in an embodiment of the inventive lattice framework, wherein each wind turbine unit is assembled about a lattice node that also serves as the bedframe for that wind turbine unit. Each bedframe node is connected to a group of converging lattice elements, so that the geometric node formed at their virtual intersection will lie in the interior of the wind turbine unit. In the following, the inventive wind energy plant may be referred to as a multi-rotor wind turbine system.

An advantage of the inventive wind energy plant is that because the bedframe nodes are located at the optimum positions in the lattice as regards load transfer, the bedframe nodes can very effectively transfer loads to the lattice structure. This means that stress and strain in the elements of the framework structure can be favourably reduced, and the lifetime of the wind energy plant can be favourably long. The invention allows the connection of a wind turbine bedframe to the support structure at the most suitable location for optimum load distribution.

Furthermore, by realizing a bedframe and a lattice node in one piece, it is no longer necessary to provide additional connections between a wind turbine unit and the lattice framework. Instead, bedframes can be completed at a manufacturing plant, transported to the site of the wind energy plant, where they are then incorporated in the lattice framework as this is assembled.

According to the invention, the method of constructing a wind energy plant comprises the steps of manufacturing a plurality of lattice nodes using the method described above; providing a plurality of lattice elements; installing a supporting structure for a lattice framework of the wind energy plant and - commencing at the supporting structure - connecting the lattice elements and the lattice nodes in a predetermined geometric pattern to assemble the lattice framework.

Particularly advantageous embodiments and features of the invention are given by the dependent claims, as revealed in the following description. Features of different claim categories may be combined as appropriate to give further embodiments not described herein.

In the following, it may be assumed that the wind turbine units are realized as horizontal axis wind turbines. A wind turbine unit may be an indirect-drive type (i.e. with a low-speed shaft turned by the aerodynamic rotor, and a gearbox connected to the generator by a high-speed shaft) or a direct-drive type (the aerodynamic rotor turns the generator rotor).

The lattice elements may also be referred to herein as "framework elements". In the following, without restricting the invention in any way, it may be assumed that the lattice elements are essentially straight. In a preferred embodiment of the invention, the lattice elements are tubular, i.e. hollow, and are made of a suitably strong material such as steel. Power export cables and communication cables can be arranged in the interior of such tubular lattice elements.

A lattice node can be manufactured using any suitable expendable mould casting procedure. Preferably, the expendable mould casting procedure is any of a sand casting process, a shell moulding process, etc.

In a preferred embodiment of the invention, the lattice connectors protrude from the body of the bedframe node. The overall shape of a lattice connector can be essentially cylindrical. In order to connect to a tubular lattice element, a lattice connector can terminate with an essentially circular cross-section.

Preferably, the lattice connectors are uniformly spaced. For example, if the lattice framework is based on a beehive pattern, each bedframe node can have three lattice connectors evenly spaced at 120° intervals; if the lattice framework is based on a pattern of equilateral triangles, each bedframe node can have six lattice connectors evenly spaced at 60° intervals; etc.

In a particularly prefered embodiment of the invention, a bedframe node is formed such that the longitudinal axes of its lattice connectors are arranged in a common plane, for example an essentially vertical plane, or the main plane of the lattice framework. In some realisations, the plane of the lattice framework may be slightly tilted relative to the vertical, while the rotational axes of the wind turbine units may be essentially horizontal.

In a particularly preferred embodiment of the invention, the axes of any two lattice connectors converge in the interior space of the bedframe node, at the virtual intersection of the axes of the corresponding lattice elements. Preferably, the axes of all lattice connectors of a bedframe node converge at a common point, i.e. a geometric node of the lattice framework. Such an arrangement of lattice connectors ensures a favourable load distribution within the lattice framework.

The lattice elements of the framework can be connected to the lattice nodes in any suitable manner. In one approach, a lattice connector of a bedframe node can be joined to a lattice element by welding. However, welding is a time-consuming and expensive procedure.

Alternatively, a lattice connector can be joined to a framework element by grouting. In such an approach, the diameter of a lattice connector can be somewhat larger or somewhat smaller than the diameter of a tubular framework element, so that one fits into the other, leaving a gap in between. When assembling the lattice framework, grout can be pushed into the gaps between lattice connectors and framework elements. The grout is then allowed to cure or harden. The resulting bond is robust so that loads can be efficiently transferred between the lattice framework and the bedframe nodes.

In a particularly preferred embodiment of the invention, the lattice connectors and the ends of tubular framework elements can terminate in complementary flanges, so that these can be joined by fasteners such as bolts. A bolted connection is faster to complete than a welded or grouted connection. To provide flanges for a bolted connection, the mould for the casting procedure is shaped to include a flange at the outer perimeter of each lattice connector. The flange can extend inward or outward, depending on whether the bolted connection is to be made on the exterior or the interior. The advantage of inwardly extending flanges is that the bolted connection can be inspected and maintained from the interior of the bedframe node, and the joint is protected from the environment.

Since the primary purpose of a wind turbine bedframe is to support the heavy generator, each lattice node is preferably formed to accommodate a shaft leading to the generator, as well as suitable interfaces for receiving the stationary components such as a gearbox, a generator, a cooling arrangement, etc.

In a further preferred embodiment of the invention, the lattice node is moulded to include lattice connectors for connection to the lattice frame elements, and shaped to receive a supporting structure for the wind turbine unit. In a preferred embodiment, the supporting structure can comprise an arrangement of steel beams which are welded to dedicated surfaces of the lattice node.

The lattice nodes can be installed in the lattice structure in order to complete the lattice framework, and the components of the wind turbine units can later be hoisted into place, so that each wind turbine unit can be installed on its bedframe structure.

A wind turbine can be controlled from a remote park controller, for example, which monitors wind conditions, grid conditions, etc. and which issues suitable power references, pitch references, and other control commands. To facilitate remote control of the wind turbine units, the inventive lattice framework preferably also comprises a communication cable arrangement in the interior of the lattice elements. Cables of a network can extend from one wind turbine to the next through the lattice elements, and a main cable interface can be arranged in a supporting tower of the framework.

The power generated by a wind turbine unit must be transported to the grid. Generally, power export cables from a conventional wind turbine extend downward through a tower and lead to a transformer. In a further preferred embodiment of the invention, the lattice framework preferably also comprises a power export cable arrangement in the interior of the lattice elements. Power export cables can extend from one wind turbine to the next through the lattice elements, to ultimately leave the framework through the supporting tower.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive multi-rotor wind energy plant;
Figure 2 shows an enlarged front view of an exemplary embodiment of a bedframe node;
Figure 3 shows a side view of the bedframe node of Figure 2;
Figure 4 shows a further exemplary embodiment of a bedframe node;
Figure 5 shows an exemplary joint between a bedframe node and lattice elements;
Figure 6 shows further exemplary embodiment of a bedframe node;
Figures 7 and 8 show nodes of prior art lattice frameworks.

In the diagrams, like numbers refer to like objects throughout. Objects in the diagrams are not necessarily drawn to scale.

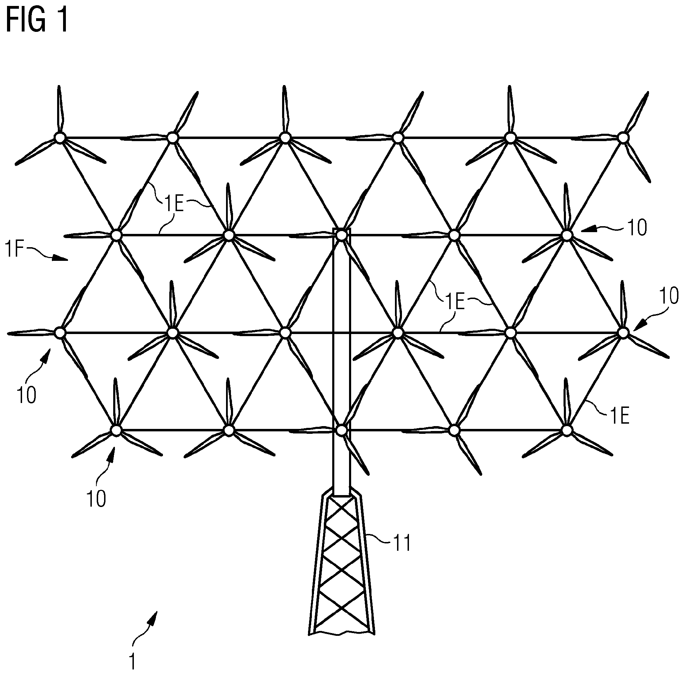

Figure 1 shows an embodiment of the inventive multi-rotor wind energy plant 1. The drawing shows a lattice framework 1F supported by a single tower structure 11. The lattice framework 1F comprises lattice elements 1E arranged in a regular geometric pattern, in this case a pattern of equilateral triangles. Multiple wind turbine units 10 are arranged at the intersections of the lattice elements 1E. The tower structure 11 can turn or yaw the entire lattice framework 1F in order to position the aerodynamic rotors optimally relative to the wind direction.

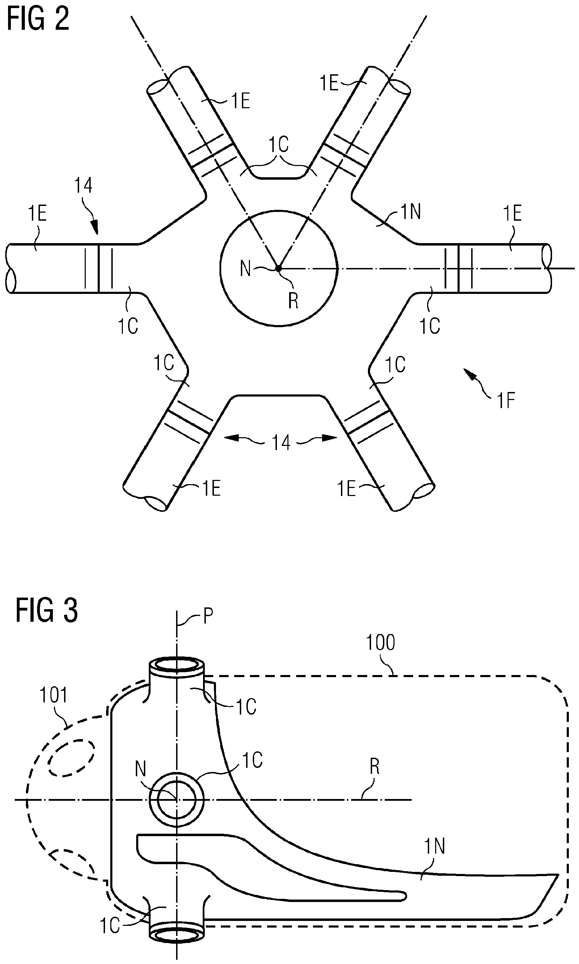

Figure 2 shows an enlarged front view of a bedframe node 1N of a wind turbine unit 10, relative to the lattice framework 1F. For clarity, only the bedframe 1N is shown, and other components such as the nacelle, the hub and the rotor blades are not shown. The diagram shows an exemplary shape of a bedframe node 1N for use at one of the seven inner nodes of the framework structure 1F of Figure 1. The bedframe node 1N has six lattice connectors 1C extending outward from a main body, each subtending an angle of 60° to its neighbour. The axes of the lattice connectors 1C converge at a geometric node N in the interior of the bedframe node 1N, which in this exemplary embodiment also coincides with the rotation axis R of the aerodynamic rotor. Of course, in other embodiments of the invention, the geometric node N at the intersection of the axes can lie above or below the rotation axis R.

An interior flange connection 14 is formed by complementary inwardly-extending flanges at the outer ends of the lattice connectors 1C and the lattice elements 1E. The bolted connections 14 can be made from the interior of the bedframe node, and can also be serviced from the bedframe interior. Alternatively, the lattice connectors 1C could be connected to the lattice elements 1E by grouting.

Other lattice nodes for the framework structure 1F of Figure 1 may be formed with fewer lattice connectors 1C as appropriate - for example each lattice node at the upper left or upper right requires only two lattice connectors, while the lattice nodes at the lower left and lower right require three lattice connectors each. Instead of preparing separate moulds, the bedframe node 1N shown here is used for each node in the framework, and the superfluous lattice connectors are simply left unused and their outer openings may be covered if appropriate.

Figure 3 shows a side view of the bedframe node 1N of Figure 2. The drawing shows the main body of the bedframe node 1N and the lattice connectors 1C, indicating that these are arranged in a common vertical plane P that includes the geometrical node N at which the axes of the lattice elements 1E converge. The diagram indicates inwardly-facing flanges 140 for a bolted connection to lattice elements. The drawing also indicates the outline of a nacelle 100 that will enclose the bedframe 1N to protect the generator and other components of the wind turbine. The drawing also indicates the outline of a hub 101 or spinner to which the rotor blades will be attached.

To support a 1 MW wind turbine unit, the bedframe node 1N may have a mass of 22000 kg, a length in the order of 6 m, and a width in the order of 2.5 m. For a lattice framework that supports 20 such wind turbine units, the diameter of each lattice connector 1C and lattice element 1E may be in the order of 2.5 m. These values are exemplary and serve to give an indication of the possible dimensions of an embodiment of the inventive lattice framework and bedframe node.

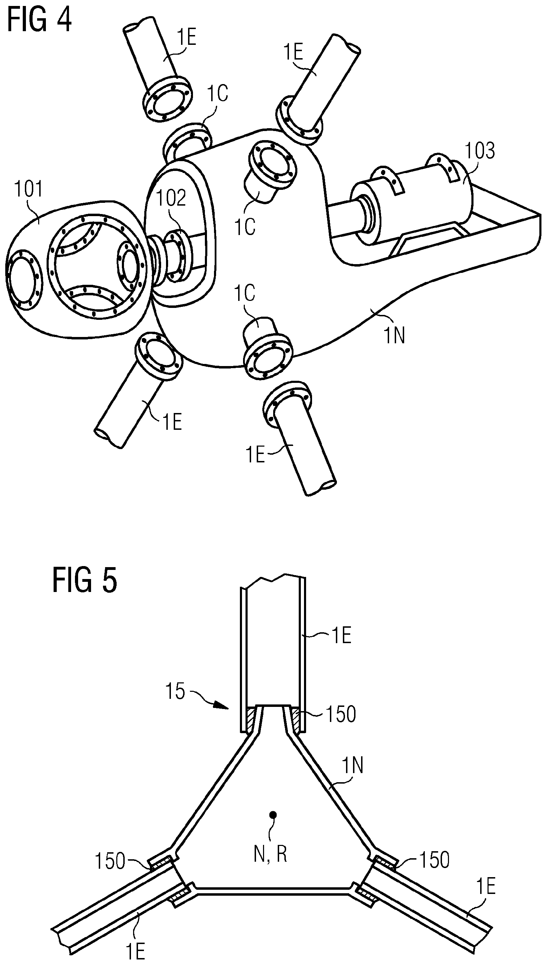

Figure 4 shows a further exemplary embodiment of a bedframe node 1N, in this case for a lattice framework based on a diamond pattern. Here, the bedframe node 1N has four lattice connectors 1C extending radially outward. The drawing also indicates components of a wind turbine unit and shows a hub 101, a shaft 102, and a generator 103 that will later be enclosed by a nacelle (not shown) arranged about the bedframe node 1N. In this exemplary embodiment, the lattice connectors 1C and the lattice elements 1E are joined by outwardly-extending flanges.

Figure 5 shows an alternative way of incorporating a bedframe node 1N in a lattice framework 1F. Here, lattice connectors 1C are bonded to lattice elements 1E of a hexagonal framework by means of grouted connections. The diagram shows a possible realisation, with lattice elements 1E inserted into the two lower lattice connectors 1C and bonded by grout 150, and the upper lattice connector 1C inserted into a vertical lattice element 1E and bonded by grout 150.

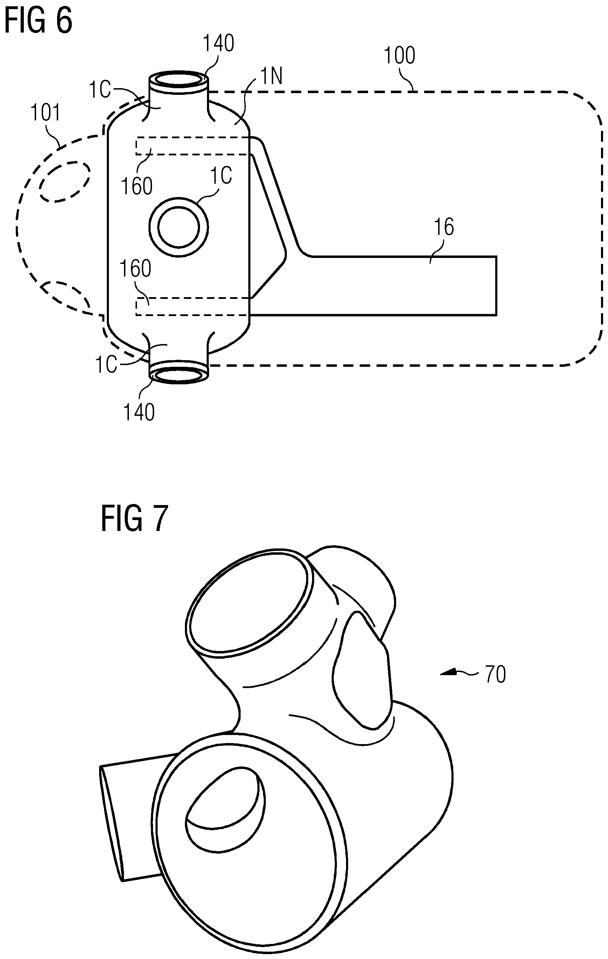

The lattice node shown in Figure 3 is shaped to serve as the bedframe of a wind turbine unit. Figure 6 shows an alternative embodiment of the inventive lattice node 1N, which is primarily shaped for interconnection in the lattice framework, and to receive a separate bedframe structure. To form this lattice node 1N, a mould is prepared to cast an annular body which has lattice connectors 1C for connection to lattice elements of a framework, and which has surfaces that can be welded or otherwise connected to a separate bedframe structure 16. The drawing indicates welded joints 160 between the node 1N and the bedframe structure 16. An advantage of this approach is that the node casting procedure can be significantly less expensive. Another advantage is that the separate bedframe structure 16 can comprise steel beams which have high structural strength but are relatively economical.

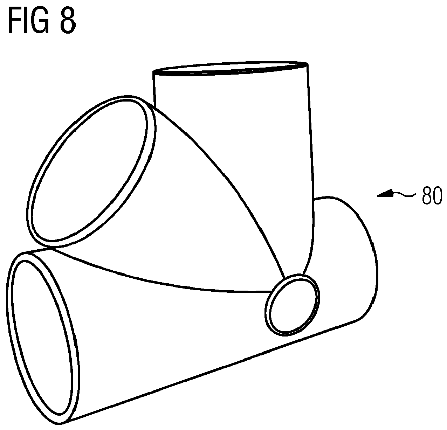

Figures 7 and 8 show nodes 70, 80 for prior art lattice frameworks. The node 70 of Figure 7 is made in a casting procedure. The node 80 of Figure 8 is made by welding complex forms. As explained above, casting and welding are expensive, so that the cost of multi-rotor wind energy plant based on such a lattice framework will include the cost of the nodes 70, 80 as well as the cost of mounting separate wind turbine units to the lattice framework.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A lattice framework (1F) of a multi-rotor wind energy plant (1), comprising at least
- a plurality of lattice elements (1E) arranged according to a geometric pattern;
- a plurality of lattice nodes (1N), wherein each lattice node (1N) comprises a plurality of outwardly extending lattice connectors (1C) for connection to converging lattice elements (1E), and wherein each lattice node (1N) is realised as a bedframe structure of a wind turbine unit (10) of the multi-rotor wind energy plant (1).

2. A lattice framework according to claim 1, wherein a lattice element (1E) comprises an essentially cylindrical tubular body.

3. A lattice framework according to any of the preceding claims, wherein the axes of at least two lattice connectors (1C) converge in an interior space of the lattice node (1N) at the virtual intersection of the corresponding lattice elements (1E) of the lattice framework (1F).

4. A lattice framework according to any of the preceding claims, wherein a lattice connector (1C) comprises a flange for bolting to a complementary flange of a tubular lattice element (1E).

5. A lattice framework according to claim 4, wherein a lattice connector (1C) and its tubular lattice element (1E) comprise inwardly-extending flanges (140) to form an interior bolted connection (14).

6. A lattice framework according to any of the preceding claims, wherein the lattice connectors (1C) of a lattice node (1N) are arranged in a common plane (P).

7. A lattice framework according to any of the preceding claims, wherein a lattice node (1N) further comprises an anterior annular opening to accommodate a shaft (102) turned by the aerodynamic rotor of the wind turbine unit (10).

8. A lattice framework according to any of the preceding claims, comprising a cable arrangement in the interior of the lattice elements (1E), which cable arrangement comprises power cables and/or communication cables.

9. A lattice framework according to any of the preceding claims, wherein a lattice node (1N) further comprises a mounting interface for connection to a generator assembly (103) of a wind turbine unit (10).

10. A method of manufacturing a lattice node (1N) of a lattice framework (1F) according to any of claims 1 to 9, comprising the steps of
- determining the position of a wind turbine bedframe relative to a geometric node (N) of the lattice framework (1F);
- obtaining the geometric parameters of the lattice elements (1E);
- preparing a lattice node mould to include a plurality of lattice connectors (1C) on the basis of the bedframe shape, the geometric position of the bedframe and the dimensions of the lattice elements (1E); and subsequently
- performing a mould casting procedure to cast the lattice node (1N).

11. A method according to claim 10, wherein the step of preparing a lattice node mould comprises the steps of providing a mould pattern for the lattice node (1N) and preparing an expendable mould for a sand casting process.

12. A method according to claim 10 or claim 11, wherein the lattice node (1N) is moulded from steel.

13. A method according to any of claims 10 to 12, wherein the lattice node mould is prepared to form a lattice node (1N) for a two-part bedframe structure (1N, 16), and is shaped to receive a generator support (16) of the two-part bedframe structure (1N, 16).

14. A wind energy plant (1) comprising a plurality of wind turbine units (10) arranged in a lattice framework (1F) according to any of claims 1 to 9.

15. A method of constructing a wind energy plant (1), which method comprises the steps of
- manufacturing a plurality of lattice nodes (1N) by the method of claims 10 to 14;
- providing a plurality of lattice elements (1E);
- installing a supporting structure (11) for a lattice framework (1F) of the wind energy plant (1); and
- connecting the lattice elements (1E) and the lattice nodes (1N) in a predetermined geometric pattern to assemble the lattice framework (1F).
